# EUROPEAN PATENT APPLICATION

(11) **EP 3 168 509 A1**
(43) Date of publication of application: **17.05.2017**
(21) Application number: 15818217.0
(22) Date of filing: 02.07.2015
(51) Int. Cl.: F16J 15/34

(54) **MECHANICAL SEAL**

(30) Priority: 11.07.2014 JP 2014143429
(71) Applicant: Eagle Industry Co., Ltd., Minato-ku Tokyo 105-8587 (JP); EagleBurgmann Japan Co., Ltd., Tokyo 105-8587 (JP)
(72) Inventor: YANAGISAWA, Takashi, Tokyo 105-8587 (JP); TAKAHASHI, Hidekazu, Tokyo 105-8587 (JP)
(74) Representative: TBK
(86) International application number: PCT/JP2015/069186
(87) International publication number: WO 2016/006535

(57) **Abstract**

Provided is a mechanical seal which improves sealing performance without providing a sealing member between a floating ring and a stationary ring. A mechanical seal (100) includes: a rotating ring (110); a stationary ring (120); a floating ring having an annular sliding portion (131) which protrudes with respect to the rotating ring (110) in the axial direction and in which a sliding surface (131a) as a distal end surface thereof in a protruding direction slides on the rotating ring (120), and a pressed portion (132) which protrudes with respect to the stationary ring (120) in the axial direction and in which a pressed surface (132a) as a distal end surface thereof in a protruding direction makes contact with the stationary ring (120), the floating ring sealing a sealed fluid via the sliding surface (131a) of the sliding portion (131) and the pressed surface (132a) of the pressed portion (132), wherein in the floating ring (130), a size of an area of an end surface in the axial direction on a fluid side L which is a surface that receives fluid pressure of the sealed fluid in a direction toward a side of the rotating ring (110), and a size of an area of an end surface in the axial direction on the fluid side L which is a surface that receives the fluid pressure in a direction toward a side of the stationary ring (120) differ from each other.

## Description

### TECHNICAL FIELD

The present invention relates to a mechanical seal using a floating ring.

### BACKGROUND ART

Conventionally, a configuration of a mechanical seal is known which is provided with a floating ring between a rotating ring which rotates with a rotating shaft and a stationary ring which is fixed to a housing. The floating ring includes a nose portion (a sliding portion) having a sliding surface which slides on the rotating ring and a nose portion (a contacting portion) having a pressed surface which is pressed by the stationary ring. In the mechanical seal configured in this manner, a sealed fluid is sealed via the sliding surface and the pressed surface, and the floating ring receives fluid pressure on a side that seals the sealed fluid. In order to prevent the floating ring from inclining in an axial direction of the rotating shaft, the nose portions (the sliding portion and the contacting portion) are provided on end surfaces of the floating ring so that forces due to fluid pressure acting on the floating ring from both sides in the axial direction of the rotating shaft are equal to each other.

### CITATION LIST

### PATENT LITERATURE

Patent Literature 1: Japanese Patent Application Laid-open No. 2005-249131

### SUMMARY OF INVENTION

### TECHNICAL PROBLEM

However, when the floating ring maintains its position without inclining in the axial direction of the rotating shaft, since a state is maintained where the pressed surface of the floating ring and a pressing surface of the stationary ring are parallel to each other, a contacting area between the pressed surface and the pressing surface increases. An increase in the contacting area between the pressed surface and the pressing surface reduces surface pressure and results in a decline in the sealing performance between the floating ring and the stationary ring.

In consideration thereof, Patent Literature 1 discloses a configuration which seals an annular gap between a floating ring 8 and a static ring (stationary ring) 4 by providing an O ring 25 as a sealing member between the floating ring 8 and the stationary ring 4. Although providing the O ring 25 in this manner improves the sealing performance between the floating ring 8 and the stationary ring 4, the number of parts increases which, in turn, causes increase in manufacturing steps as well as cost.

Furthermore, providing the O ring 25 creates the following problems. In some cases, as the O ring 25 receives fluid pressure, the shape of the O ring 25 deforms to create a gap in an axial direction of a rotating shaft between the stationary ring 4 and the O ring 25. The shape of the O ring 25 is particularly susceptible to deformation under high pressure conditions and may result in a decline in the sealing performance between the floating ring 8 and the stationary ring 4. In addition, when the shape of the O ring 25 deforms under the influence of fluid pressure, a magnitude of a force on the floating ring 8 due to fluid pressure acting on a side of a rotating ring 6 from a side of the stationary ring 4 in the axial direction changes and makes it difficult to control positioning of the floating ring 8.

In consideration thereof, it is an object of the present invention to improve sealing performance without providing a sealing member between a floating ring and a stationary ring.

### SOLUTION TO PROBLEM

In order to solve the problem described above, the present invention adopts the following means.

Specifically, a mechanical seal according to the present invention is
a mechanical seal for sealing an annular gap between a rotating shaft and a housing, the mechanical seal including:
a rotating ring which rotates with the rotating shaft;
a stationary ring which is fixed with respect to the housing; and
a floating ring which is provided between the rotating ring and the stationary ring in an axial direction of the rotating shaft, the floating ring having an annular sliding portion which protrudes with respect to the rotating ring in the axial direction and in which a distal end surface thereof in a protruding direction slides on the rotating ring, and an annular contacting portion which protrudes with respect to the stationary ring in the axial direction and in which a distal end surface thereof in a protruding direction makes contact with the stationary ring, the floating ring sealing a sealed fluid via the distal end surface of the sliding portion and the distal end surface of the contacting portion,
wherein in the floating ring,
a size of an area of an end surface in the axial direction which is a surface that receives fluid pressure of the sealed fluid in a direction toward a side of the rotating ring from a side of the stationary ring in the axial direction, and a size of an area of an end surface in the axial direction which is a surface that receives the fluid pressure in a direction toward the side of the stationary ring from the side of the rotating ring in the axial direction differ from each other.

In addition, favorably, an innermost diameter of the distal end surface of the sliding portion and an innermost diameter of the contacting portion differ from each other when the sealed fluid is present on an outer diameter side of the sliding portion, and sizes of an outermost diameter of the distal end surface of the sliding portion and an outermost diameter of the contacting portion differ from each other when the sealed fluid is present on an inner diameter side of the sliding portion.

According to this configuration, among forces with respect to the floating ring due to fluid pressure of the sealed fluid, a magnitude of a force acting from the side of the stationary ring to the side of the rotating ring and a magnitude of a force acting from the side of the rotating ring to the side of the stationary ring in the axial direction of the rotating shaft differ from each other. Therefore, the floating ring inclines with respect to the axial direction of the rotating shaft due to action of rotational moment.

When an radially outer side of the floating ring inclines from the side of the stationary ring to the side of the rotating ring (in other words, when the floating ring inclines so that an outer circumferential surface thereof faces the side of the rotating ring), an inner diameter side of the distal end surface of the sliding portion of the floating ring separates from the rotating ring, an outer diameter side slides on the rotating ring, an outer diameter side of the distal end surface of the contacting portion of the floating ring separates from the stationary ring, and an inner diameter side of the distal end surface of the contacting portion of the floating ring makes contact with the stationary ring.

On the other hand, when the radially outer side of the floating ring inclines from the side of the rotating ring to the side of the stationary ring (in other words, when the floating ring inclines so that the outer circumferential surface thereof faces the side of the stationary ring), an outer diameter side of the distal end surface of the sliding portion of the floating ring separates from the rotating ring, an inner diameter side of the distal end surface of the sliding portion of the floating ring slides on the rotating ring, an inner diameter side of the distal end surface of the contacting portion of the floating ring separates from the stationary ring, and an outer diameter side of the distal end surface of the contacting portion of the floating ring makes contact with the stationary ring.

As described above, due to the floating ring inclining with respect to the axial direction of the rotating shaft and a part of the distal end surface of the contacting portion of the floating ring separating from the stationary ring, a contacting area between the floating ring and the stationary ring decreases and the floating ring makes local contact with the stationary ring. Therefore, contacting pressure between the floating ring and the stationary ring increases and sealing performance between the floating ring and the stationary ring improves. As a result, there is no need to provide a sealing member between the floating ring and the stationary ring.

In addition, when the floating ring inclines with respect to the axial direction of the rotating shaft and a side, which seals the sealed fluid, of the distal end surface of the sliding portion of the floating ring separates from the rotating ring, the sealed fluid enters a space formed as a result of the separation and circulation of the sealed fluid is promoted, enabling deposited material between the floating ring and the rotating ring to be flushed out more easily and improving lubricity of the sliding surface due to penetration of the fluid. On the other hand, when a side, which does not seal the sealed fluid, of the distal end surface of the sliding portion of the floating ring separates from the rotating ring, an external fluid such as an atmosphere enters a space formed as a result of the separation and sliding portions of the rotating ring and the floating ring are readily cooled.

Furthermore, favorably, the mechanical seal may further include: an annular sleeve having a cylindrical shaft fixing portion with an inner circumferential surface fixed to an outer circumferential surface of the rotating shaft and a holding portion which extends from the shaft fixing portion toward an radially outer side and which holds the rotating ring; and an annular sealing member which seals an annular gap between the rotating ring and the holding portion, wherein a section where the sealing member and the rotating ring come into contact with each other is on an opposite side to a side of the sealed fluid in a radial direction with respect to the sliding portion (for example, when the sealed fluid is on an outer diameter side of the sliding portion, the opposite side to the outer diameter side or, in other words, an inner diameter side). Due to the section where the sealing member makes contact with the rotating ring being on a side opposite to the sealed fluid in the radial direction with respect to the sliding portion or, in other words, a sealing section between the rotating ring and the sleeve being on a side opposite to the sealed fluid in the radial direction with respect to the sliding portion, a side on which the sealing member is present in an area of the end surface receiving fluid pressure in the axial direction of the rotating ring can be increased. Therefore, a force acting from a side of the rotating ring to a side of the stationary ring in the axial direction on the rotating ring increases, contacting pressure between the rotating ring and the distal end surface of the sliding portion of the floating ring increases, and sealing performance between the rotating ring and the floating ring improves.

### ADVANTAGEOUS EFFECTS OF INVENTION

As described above, according to the present invention, sealing performance can be improved without providing a sealing member between a floating ring and a stationary ring.

### BRIEF DESCRIPTION OF DRAWINGS

Fig. 1 is a schematic sectional view showing an overall configuration of a mechanical seal according to an Example of the present invention.
Fig. 2 is a schematic sectional view for explaining forces that act on the mechanical seal according to the present invention.
Figs. 3A and 3B are sectional views showing states where rotational moment has caused a floating ring provided in the mechanical seal according to the present invention to incline.
Figs. 4A to 4C are sectional views showing the floating ring in an uninclined state and the floating ring in an inclined state.

### DESCRIPTION OF EMBODIMENTS

Hereinafter, modes for implementing the present invention will be exemplarily described in detail based on examples thereof with reference to the drawings. However, the dimensions, materials, shapes, relative arrangements and so on of constituent parts described in the examples are not intended to limit the scope of the present invention to these alone in particular unless specifically described.

### (Present Example)

### <Configuration of mechanical seal according to present Example>

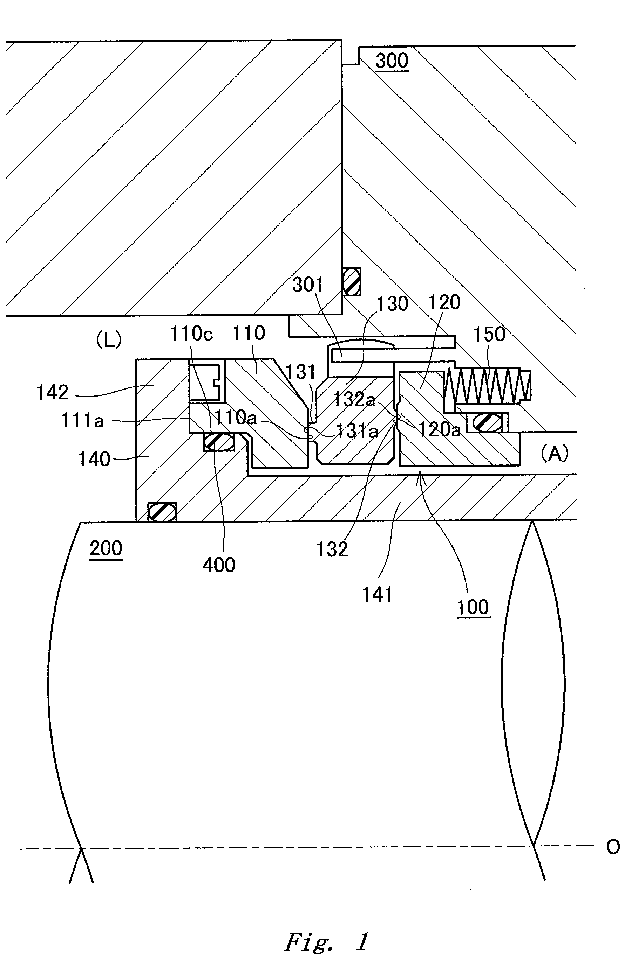

An overall configuration of a mechanical seal according to an Example of the present invention (hereinafter, referred to as the present Example) will be described with reference to Fig. 1. Fig. 1 is a schematic sectional view showing an overall configuration of a mechanical seal according to the present Example. While a single seal configuration using one mechanical seal will be described in the present Example, the configuration of the present invention may be applied to a double seal configuration using two mechanical seals. A mechanical seal is used to seal an annular gap between a rotating shaft and a housing.

As shown in Fig. 1, a mechanical seal 100 according to the present Example includes a rotating ring 110 which rotates with a rotating shaft 200, a stationary ring (static ring) 120 which is fixed to a housing 300, and a floating ring 130 which is provided between the rotating ring 110 and the stationary ring 120. In addition, the mechanical seal 100 includes a sleeve 140 provided with a cylindrical shaft fixing portion 141 having an inner circumferential surface fixed to an outer circumferential surface of the rotating shaft 200 and a holding portion 142 which extends to an radially outer side of the rotating shaft 200 from the shaft fixing portion 141 and which holds the rotating ring 110. Furthermore, the mechanical seal 100 includes a spring 150 as a biasing member which biases the stationary ring 120 with respect to the floating ring 130.

The rotating ring 110 includes a sliding surface 110a which is one end surface in a direction parallel to the rotating shaft 200 (hereinafter, referred to as an axial direction) and which slides with respect to the floating ring 130. The stationary ring 120 includes a pressing surface 120a which is one end surface in the axial direction and which makes contact with the floating ring 130 and presses the floating ring 130 toward a side of the rotating ring 110.

The floating ring 130 is provided between the rotating ring 110 and the stationary ring 120 in the axial direction without being fixed to other members. Moreover, while the floating ring 130 slides with respect to the rotating ring 110, movement of the floating ring 130 in a rotational direction of the rotating shaft 200 is restricted by a pin 301 provided so as to protrude from the housing 300. In addition, the floating ring 130 includes a sliding portion 131 which protrudes with respect to the rotating ring 110 and which slides with respect to the sliding surface 110a of the rotating ring 110 at a distal end surface (hereinafter, referred to as a sliding surface 131a) in a protruding direction. Furthermore, the floating ring 130 includes a pressed portion 132 as a contacting portion which protrudes with respect to the stationary ring 120 and which is pressed by the pressing surface 120a of the stationary ring 120 at a distal end surface (hereinafter, referred to as a pressed surface 132a) in a protruding direction.

The mechanical seal 100 seals a sealed fluid via the sliding surface 131a and the pressed surface 132a of the floating ring 130. In other words, the inside of the housing 300 is divided into a fluid side L on which the sealed fluid is sealed via the sliding surface 131a and the pressed surface 132a and an atmosphere side (a non-fluid side) A on which the sealed fluid is not sealed. In the present Example, as shown in Fig. 1, the fluid side L is an radially outer side of the rotating shaft 200 than the sliding surface 131a and the pressed surface 132a and the atmosphere side A is an radially inner side of the rotating shaft 200 than the sliding surface 131 a and the pressed surface 132a.

### <Forces acting on respective members of mechanical seal>

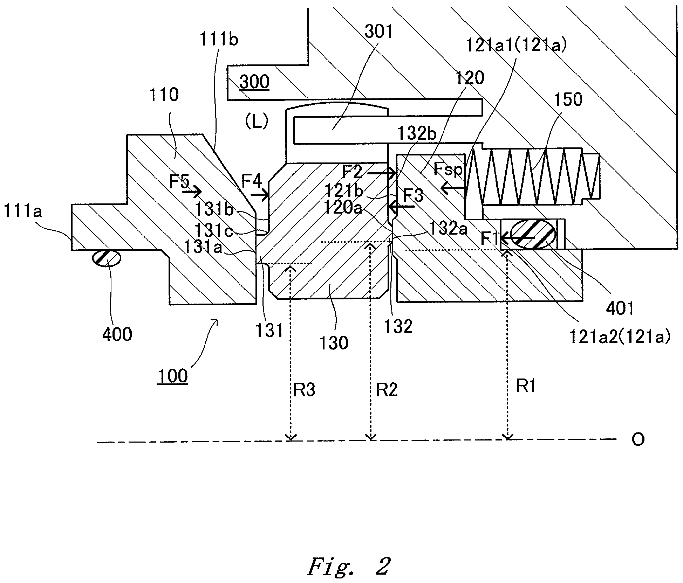

Next, forces that act on the respective members of a mechanical seal according to the present Example will be described with reference to Fig. 2. Fig. 2 is a schematic sectional view for explaining forces that act on the respective members of the mechanical seal according to the present Example. Moreover, in Fig. 2, a part of the components including the sleeve 140 has been omitted. The rotating shaft 200 has also been omitted with the exception of a shaft center O of the rotating shaft 200. Hereinafter, in the axial direction, a side on which the rotating ring is present (a left side in the drawing) will be referred to as a rotating ring side and a side on which the stationary ring is present (a right side in the drawing) will be referred to as a stationary ring side.

An end surface 121a which is on an opposite side to a side opposing the floating ring 130 and which receives the influence of fluid pressure P of the sealed fluid among end surfaces in the axial direction of the stationary ring 120 is assumed to have an area of S1. As shown in Fig. 2, a force F1 = P × S1 acts on the end surface 121a toward a side of the rotating ring 110 in the axial direction. In addition, a diameter of a portion at a shortest distance from the shaft center O of the rotating shaft 200 in the end surface 121a (in the present Example, a diameter of a contacting section between the stationary ring 120 and a secondary seal 401 which is an innermost diameter position where the sealed fluid is sealed) is assumed to be R1.

An end surface 121b which is on a side opposing the floating ring 130 and which receives the influence of fluid pressure P of the sealed fluid among end surfaces in the axial direction of the stationary ring 120 is assumed to have an area of S2. Moreover, in the present Example, it is assumed that the end surface 121b which receives the influence of fluid pressure P includes a surface which receives the influence of fluid pressure P in the pressing surface 120a. As shown in Fig. 2, a force F2 = P × S2 acts on the end surface 121b toward a side of the stationary ring 120 in the axial direction. In addition, a diameter of a portion at a shortest distance from the shaft center O of the rotating shaft 200 in the end surface 121b (in the present Example, corresponding to an innermost diameter of the pressed surface 132a) is assumed to be R2.

An end surface 132b which is on a side opposing the stationary ring 120 and which receives the influence of fluid pressure P of the sealed fluid among end surfaces in the axial direction of the floating ring 130 is assumed to have an area of S3. Moreover, in the present Example, it is assumed that the end surface 132b which receives the influence of fluid pressure P includes a surface which receives the influence of fluid pressure P in the pressed portion 132. As shown in Fig. 2, a force F3 = P × S3 acts on the end surface 132b toward a side of the rotating ring 110 in the axial direction.

An end surface 131b which is on a side opposing the rotating ring 110 and which receives the influence of fluid pressure P of the sealed fluid among end surfaces in the axial direction of the floating ring 130 is assumed to have an area of S4. As shown in Fig. 2, a force F4 = P × S4 acts on the end surface 131b toward a side of the stationary ring 120 in the axial direction. In addition, a diameter of a portion at a shortest distance from the shaft center O of the rotating shaft 200 in the end surface 131b (in the present Example, corresponding to an innermost diameter of the sliding surface 131a) is assumed to be R3.

Since the stationary ring 120 separates from the floating ring 130 when a relationship between forces F1 and F2 which act on the stationary ring 120 in the axial direction satisfy F2 > F1, a biasing force Fsp is applied to the stationary ring 120 by the spring 150 in a same direction as a direction in which F1 acts so as to maintain a state where the stationary ring 120 is in contact with the floating ring 130. By adjusting the biasing force Fsp so as to satisfy a relationship expressed as F2 < F1 + Fsp, the stationary ring 120 can maintain a state of contact with the floating ring 130. However, using a spring 150 with a large biasing force Fsp makes assembly work of the mechanical seal 100 challenging.

In consideration thereof, the present Example adopts a relationship satisfying F2 < F1. Specifically, a configuration is adopted in which the area S1 of the end surface 121a of the stationary ring 120 is larger than the area S2 of the end surface 121b of the stationary ring 120. In other words, a configuration is adopted in which a width from the innermost diameter R1 of the end surface 121a to an outer diameter of the stationary ring 120 is larger than a width from the innermost diameter R2 of the pressed surface 132a to the outer diameter of the stationary ring 120. Simply put, a configuration is adopted which satisfies R2 > R1.

Therefore, in the configuration of the present Example, a relationship expressed as F2 < F1 + Fsp is always satisfied regardless of a magnitude of the biasing force Fsp of the spring 150. By setting forces acting on the stationary ring 120 as described above, a state where the stationary ring 120 is in contact with the floating ring 130 can be maintained.

In addition, a condition under which a rear surface of the rotating ring 110 (a surface on an opposite side to the floating ring 130 of the rotating ring 110) makes contact with the holding portion 142 of the sleeve 140 due to pressure will be described. A force that presses the stationary ring 120 with respect to the floating ring 130 is assumed to be F and a force that presses the rotating ring 110 with respect to the floating ring 130 due to the influence of fluid pressure P is assumed to be F5. The condition under which the rear surface of the rotating ring 110 makes contact with the holding portion 142 is F + F3 > F4 + F5. Even if the present structure is inclined with respect to the axial direction, the condition under which the stationary ring 120 maintains a state of contact with the floating ring 130 and the condition under which the rear surface of the rotating ring 110 makes contact with the holding portion 142 must be met.

### <Advantages of present Example>

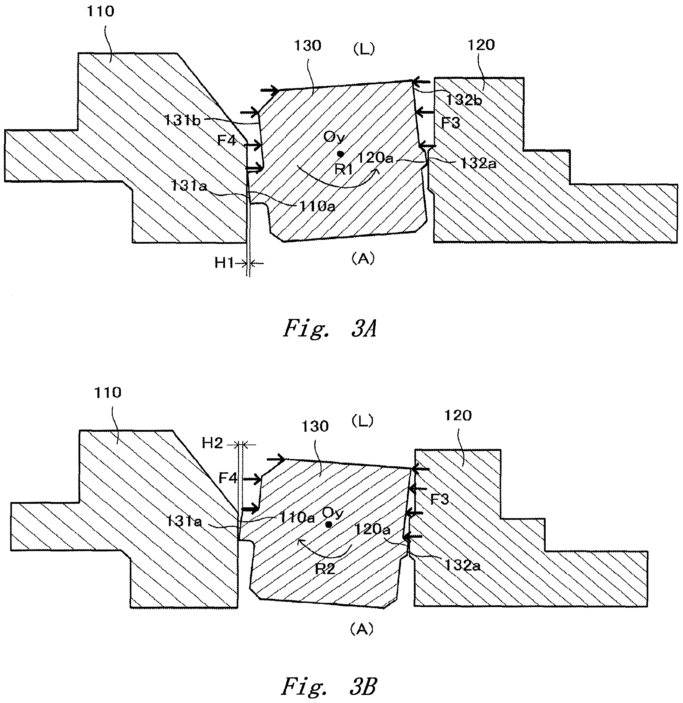

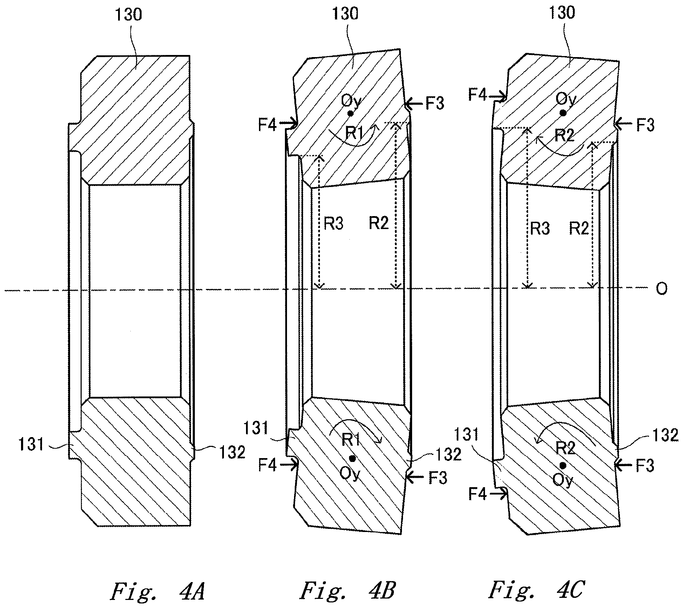

Next, advantages of the present Example will be described with reference to Figs. 3A to 4C. Figs. 3A and 3B are diagrams showing states where rotational moment has caused the floating ring provided in the mechanical seal according to the present invention to incline, in which Fig. 3A shows the floating ring configured so as to incline in a direction of R1 in the drawing (counterclockwise). In addition, Fig. 3B shows the floating ring configured so as to incline in a direction of R2 in the drawing (clockwise). Moreover, Figs. 3A and 3B only show a part of a cross section of the floating ring and a depth thereof is omitted. Figs. 4A to 4C are sectional views showing the floating ring in an uninclined state and the floating ring in an inclined state. Fig. 4A shows a state where a floating ring configured as shown in Fig. 3A is not inclined and Fig. 4B shows a state where a floating ring configured as shown in Fig. 3A is inclined. In addition, Fig. 4C shows a state where a floating ring configured as shown in Fig. 3B is inclined.

In the present Example, since a size of the innermost diameter R3 of the sliding surface 131 a and a size of the innermost diameter R2 of the pressed surface 132a differ from each other, the area S4 of the end surface 131 b which receives fluid pressure P to the side of the stationary ring 120 and the area S3 of the end surface 132b which receives fluid pressure P to the side of the rotating ring 110 differ from each other. Therefore, magnitudes of the force F4 that acts on the end surface 131 b and the force F3 that acts on the end surface 132b differ from each other, and due to action of rotational moment, the floating ring 130 that is not fixed to other members inclines in the axial direction.

When the floating ring 130 inclines in the axial direction, a part of the sliding surface 131a of the floating ring 130 separates from the sliding surface 110a of the rotating ring 110 and a part of the pressed surface 132a of the floating ring 130 separates from the pressing surface 120a of the stationary ring 120.

As described above, in the present Example, due to a part of the pressed surface 132a of the floating ring 130 separating from the pressing surface 120a of the stationary ring 120, a contacting area between the pressed surface 132a and the pressing surface 120a decreases and causes the pressed surface 132a and the pressing surface 120a to come into local contact with each other. Therefore, contacting pressure of the pressing surface 120a with respect to the pressed surface 132a increases and sealing performance between the floating ring 130 and the stationary ring 120 improves. In particular, since higher pressure acts on the floating ring 130 under high pressure conditions, a larger rotational moment acts and a larger force that causes inclination acts and, as a result, sealing performance improves. Accordingly, in the configuration of the present Example, a sealing member such as an O ring for sealing the gap between the floating ring 130 and the stationary ring 120 need not be provided. Therefore, problems encountered when providing an O ring which makes positioning of the floating ring 130 difficult under high pressure conditions do not arise.

Furthermore, effects respectively produced when adopting a configuration in which inclination occurs in a direction of R1 shown in Figs. 3A and 4B and when adopting a configuration in which inclination occurs in a direction of R2 shown in Figs. 3B and 4C as a configuration of a floating ring will be described.

In the present Example, as shown in Figs. 4A to 4C, a center of moment Oy of the floating ring 130 (a center of rotation: more specifically, a center of moment in each sectional portion shown in Figs. 4A to 4C) is on an radially outer side than whichever is a smaller diameter between the innermost diameter R3 of the sliding surface 131a and the innermost diameter R2 of the pressed surface 132a. Specifically, in the configuration shown in Figs. 3A and 4B in which the innermost diameter R3 is smaller than the innermost diameter R2, the center of rotation Oy is on the radially outer side than the innermost diameter R3. Therefore, due to rotational moment, the floating ring 130 rotates in the direction of R1 around the center of rotation Oy. In contrast, in the configuration shown in Figs. 3B and 4C in which the innermost diameter R2 is smaller than the innermost diameter R3, the center of rotation Oy is on the radially outer side than the innermost diameter R2. Therefore, due to rotational moment, the floating ring 130 rotates in the direction of R2 around the center of rotation Oy.

First, with reference to Figs. 3A and 4B, a case where the innermost diameter R3 is smaller than the innermost diameter R2 or, in other words, a case where the area S4 is larger than the area S3 will be described. In this case, although the force F4 that acts on the end surface 131b is larger than the force F3 that acts on the end surface 132b, since the center of rotation Oy is on the radially outer side than the innermost diameter R3, a difference between the force F4 that acts on the end surface 131b and the force F3 that acts on the end surface 132b (in other words, a resultant force F4 - F3) acts on a portion on an radially inner side than the center of rotation Oy of the end surface 131b. As a result, since the floating ring 130 inclines in the direction of R1 (counterclockwise) in Fig. 3A, the floating ring 130 inclines so that an radially outer side thereof moves toward the side of the rotating ring 110.

In a state where the floating ring 130 is inclined in the direction of R1, a surface on the atmosphere side A of the sliding surface 131a separates from the sliding surface 110a and only the fluid side L of the sliding surface 131 a makes contact with and slides on the sliding surface 110a. Accordingly, an effect can be produced in that an external fluid such as the atmosphere enters a gap H1 formed as a result of the separation of the surface on the atmosphere side A of the sliding surface 131a from the sliding surface 110a and sliding portions of the rotating ring 110 and the floating ring 130 are readily cooled.

Next, with reference to Figs. 3B and 4C, a case where the innermost diameter R2 is smaller than the innermost diameter R3 or, in other words, a case where the area S3 is larger than the area S4 will be described. In this case, although the force F3 that acts on the end surface 132b becomes larger than the force F4 that acts on the end surface 131b, since the center of rotation Oy is on the radially outer side than the innermost diameter R2, a difference between the force F3 that acts on the end surface 132b and the force F4 that acts on the end surface 131b (in other words, a resultant force F3 - F4) acts on a portion on an radially inner side than the center of rotation Oy of the end surface 132b. As a result, since the floating ring 130 inclines in the direction of R2 (clockwise) in Fig. 3B, the floating ring 130 inclines so that an radially outer side thereof moves toward the side of the stationary ring 120.

In a state where the floating ring 130 is inclined in the direction of R2, a surface on the fluid side L of the sliding surface 131a separates from the sliding surface 110a and only the atmosphere side A of the sliding surface 131a makes contact with and slides on the sliding surface 110a. Accordingly, the sealed fluid enters a gap H2 formed as a result of the separation of the surface on the fluid side L of the sliding surface 131a from the sliding surface 110a. As a result, effects can be produced in that circulation of the sealed fluid is promoted and deposited material between the floating ring 130 and the rotating ring 110 are flushed out more easily.

An O ring 400 as a sealing member that seals a gap between the holding portion 142 of the sleeve 140 and the rotating ring 110 is provided in a depressed portion that is depressed in the radial direction in the holding portion 142 so as to create a seal by being squashed in the radial direction. Accordingly, since the O ring 400 does not provide a seal by being squashed in the axial direction (which is a direction in which the rotating ring is displaced) due to pressure of the sealed fluid, a seal can be always provided at a constant contacting pressure without affecting deformation of the rotating ring and without causing a significant change in seal surface pressure due to a magnitude of pressure of the sealed fluid and, for example, a more reliable seal can be provided as compared to a configuration in which an O ring is provided in contact with an end surface 111a of the rotating ring 110 in the axial direction. In addition, favorably, a section where the sealing member and the rotating ring come into contact with each other is on an opposite side to a side of the sealed fluid in the radial direction with respect to the sliding portion (for example, when the sealed fluid is on an outer diameter side of the sliding portion, the opposite side to the outer diameter side or, in other words, an inner diameter side). Due to the section where the sealing member makes contact with the rotating ring being on a side opposite to the sealed fluid in the radial direction with respect to the sliding portion (in other words, due to a sealing section between the rotating ring and the sleeve being on a side opposite to the sealed fluid in the radial direction with respect to the sliding portion), a side on which the sealing member is present in an area of the end surface receiving fluid pressure in the axial direction of the rotating ring can be increased. Therefore, a force acting on the rotating ring from a side of the rotating ring to a side of the stationary ring in the axial direction increases, contacting pressure between the rotating ring and the distal end surface of the sliding portion of the floating ring increases, and sealing performance between the rotating ring and the floating ring improves.

Moreover, as shown in Fig. 2, a root portion 131c of the sliding portion 131 of the floating ring 130 (a portion between the sliding portion 131 and the end surface 131b) favorably has a structure having a gradually curving surface or a tapered shape instead of a right angle (a structure making the root portion less susceptible to damage and less likely to create a fluid reservoir) in order to prevent a fluid reservoir of the sealed fluid from being readily created and to make the root portion less susceptible to damage.

### REFERENCE SIGNS LIST

- 100: Mechanical seal
- 110: Rotating ring
- 110a: Sliding surface
- 120: Stationary ring
- 120a: Pressing surface
- 130: Floating ring
- 131: Sliding portion
- 131a: Sliding surface
- 132: Pressed portion
- 132a: Pressed surface
- 140: Sleeve
- 141: Shaft fixing portion
- 142: Holding portion
- 150: Spring
- 200: Rotating shaft
- 300: Housing
- 301: Pin
- 400: O ring

## Claims

1. A mechanical seal for sealing an annular gap between a rotating shaft and a housing, the mechanical seal comprising:
a rotating ring which rotates with the rotating shaft;
a stationary ring which is fixed with respect to the housing; and
a floating ring which is provided between the rotating ring and the stationary ring in an axial direction of the rotating shaft, the floating ring having an annular sliding portion which protrudes with respect to the rotating ring in the axial direction and in which a distal end surface thereof in a protruding direction slides on the rotating ring, and an annular contacting portion which protrudes with respect to the stationary ring in the axial direction and in which a distal end surface thereof in a protruding direction makes contact with the stationary ring, the floating ring sealing a sealed fluid via the distal end surface of the sliding portion and the distal end surface of the contacting portion,
wherein in the floating ring,
a size of an area of an end surface in the axial direction which is a surface that receives fluid pressure of the sealed fluid in a direction toward a side of the rotating ring from a side of the stationary ring in the axial direction, and a size of an area of an end surface in the axial direction which is a surface that receives the fluid pressure in a direction toward the side of the stationary ring from the side of the rotating ring in the axial direction differ from each other.

2. The mechanical seal according to claim 1, wherein an innermost diameter of the distal end surface of the sliding portion and an innermost diameter of the contacting portion differ from each other when the sealed fluid is present on an outer diameter side of the sliding portion, and sizes of an outermost diameter of the distal end surface of the sliding portion and an outermost diameter of the contacting portion differ from each other when the sealed fluid is present on an inner diameter side of the sliding portion.

3. The mechanical seal according to claim 1 or 2 further comprising:
an annular sleeve having a cylindrical shaft fixing portion with an inner circumferential surface fixed to an outer circumferential surface of the rotating shaft and a holding portion which extends from the shaft fixing portion toward an radially outer side and which holds the rotating ring; and
an annular sealing member which seals an annular gap between the rotating ring and the holding portion,
wherein a section where the sealing member and the rotating ring come into contact with each other is on an opposite side to a side of the sealed fluid in a radial direction with respect to the sliding portion.
